# EUROPEAN PATENT APPLICATION

(11) **EP 2 194 241 A1**
(43) Date of publication of application: **09.06.2010**
(21) Application number: 08170821.6
(22) Date of filing: 05.12.2008
(51) Int. Cl.: F01L 1/344, F16H 49/00, F01L 1/352

(54) **Variable cam phaser**

(71) Applicant: Delphi Technologies, Inc., Troy, MI 48007 (US)
(72) Inventor: Berndorfer, Axel, 54453 Nittel (DE)
(74) Representative: Office Freylinger

(57) **Abstract**

Variable cam phaser for a camshaft of an internal combustion engine comprises a drive member (14); and a harmonic drive operatively connected to the drive member (14) and having an output member for driving a camshaft (12), the harmonic drive being controllable by means of a rotatable control shaft (22). The harmonic drive comprises a roller bearing (20) with an elliptically configured inner ring (34), an internally toothed flexspline (24, 24') that is arranged on the inner ring (34) of the roller bearing and that cooperates with an externally toothed circular spline (26, 26').

## Description

### Technical field

The present invention generally relates to the field of internal combustion engines and more specifically to a variable cam phaser for adjusting the phase of the engine camshaft.

### Background Art

As it is well known, a variable cam phaser is used to change the cam lobe (valve lift event) timing to crankshaft timing while the engine is running, based on the parameters of the engine. Thereby, optimum values for fuel consumption and exhaust emissions can be obtained in different areas of the engine's operating characteristics. An elegant manner of varying the valve timing is realized by rotating the camshaft relative to its driving member, typically a sprocket wheel or pulley connected to the crankshaft via a chain, respectively a toothed belt.

US 6,328,006 describes such a device for adjusting the phase of a camshaft of an internal combustion engine and comprises a drive gear (sprocket wheel) for driving a camshaft accommodated in a coaxial arrangement relative to the camshaft. The cam phaser comprises an electric motor communicating with the camshaft via a harmonic drive. The shaft of the electric motor is rigidly connected to the elliptically configured inner ring of a roller bearing via a sleeve, forming the wave generator oft the harmonic drive. The outer ring of the roller bearing is connected to a flexible, externally toothed flexspline that is configured as a whole like a pot and that communicates with the camshaft. The external thread of the flexspline cooperates with a rigid, internally toothed circular spline. The flexspline has two teeth less than the circular spline. Consequently, when the wave generator makes one revolution, the flexspline regresses by two by two teeth relative to the circular spline.

The use of a harmonic drive in a cam phaser is indeed advantageous because a big gear reduction ratio can be easily obtained and the harmonic drive in itself may be relatively compact. However as it appears from the above embodiment, the mechanical construction of a cam phaser incorporating a harmonic drive is relatively complex, and the cam phaser mounting on the camshaft may be cumbersome.

### Object of the Invention

It is an object of the present invention to provide an alternative variable cam phaser of simple construction. This is achieved by a variable cam phaser according to claim 1.

### General Description of the Invention

According to the present invention, a variable cam phaser comprises a harmonic drive operatively connected to the camshaft; however, the harmonic drive has an inversed configuration. The harmonic drive comprises a roller bearing with an elliptically configured inner ring, an internally toothed flexspline that is arranged on the inner ring of said roller bearing and that cooperates with an externally toothed circular spline. Hence, the roller bearing is the outer part and the circular spline at the center, the flexspline being arranged in-between. The output member may depend on the embodiment. The harmonic drive enables the camshaft to be relatively angularly adjusted with respect to the drive member, while maintaining driving engagement between both.

Using such harmonic drive configuration, where the parts are concentrically arranged but the circular spline is in the center and thus surrounded by the wave generator formed by the roller bearing and control shaft, it is possible to achieve more compact designs of the cam phaser. As a whole, this results in a simplified design with less components; the output may be directly on the camshaft thereby avoiding tolerance stack and mechanical tension in the system.

It may be noted that the terms "flexspline" and "circular spline" are used herein because they are conventional in the art of harmonic drives. Hence, "flexspline" typically designates a flexible gear with spline type teeth (substantially rectangular teeth extending parallel to the gear's rotation axis); while "circular spline" typically designates a rigid gear with corresponding spline type teeth. However, other gear shapes and cooperating teeth geometries and may be used for the flexspline and circular spline.

Preferably, the control shaft is a hollow shaft and has an inner bearing section on which the outer ring of the roller bearing is arranged. The elliptical shape of inner ring may be obtained, e.g., either by providing an elliptical inner diameter of the hollow shaft at the bearing section, or by using a roller bearing with an elliptically configured outer shape; in both cases, the inner ring gets its elliptical configuration through the rollers (balls or the like).

An electric motor is advantageously associated with the control shaft to be able to control the control shaft's rotating direction and speed.

Preferably, the harmonic drive and electric motor are integrated inside the hollow control shaft for mounting at the end of the camshaft, and therefore coaxially therewith.

Regarding the electric motor, one of the armature or the field component may be fixed to the inner wall of the control shaft while the other is concentrically arranged.

The harmonic drive may be mounted on a support element that comprises a tubular portion rotationally supporting the drive member and having an inner profiled section for receiving the camshaft's end therein. The support member may further include a sleeve coaxial with the tubular portion for supporting the electric motor's armature and adapted to receive a screw therethrough to be secured to the camshaft.

It is thus possible to manufacture the present cam phaser as a single unit featuring all the components necessary to drive the camshaft, including normal drive and phase change, and that can be coaxially mounted onto the camshaft.

In one embodiment, the flexspline is configured as a pot and either forms the output member (and is thus connected to the camshaft) or is connected to drive member, in which case the circular spline forms the output member. In another embodiment, the flexspline takes the form of a flexible, internally toothed ring that cooperates with the concentrically arranged, externally toothed circular spline as well as a further concentric externally toothed gear, the latter having however less teeth than the circular spline.

The drive member may typically take the form a gear such as a sprocket wheel or pulley, to be in turn driven by the engine's crankshaft via a chain, respectively a toothed belt.

The present cam phaser may include a phase detector to determine the angular position of the camshaft as well as an electronic control unit to operate the electric motor in accordance with phase information provided by the Engine control unit based on engine parameters.

### Brief Description of the Drawings

Further details and advantages of the present invention will be apparent from the following detailed description of not limiting embodiments with reference to the attached drawings, wherein:
Fig. 1: is a longitudinal section view through a first embodiment of the present cam phaser;
Fig. 2: is a longitudinal section view through a second embodiment of the present cam phaser;
Fig. 3: is a longitudinal section view through a third embodiment of the present cam phaser.

### Description of a Preferred Embodiment

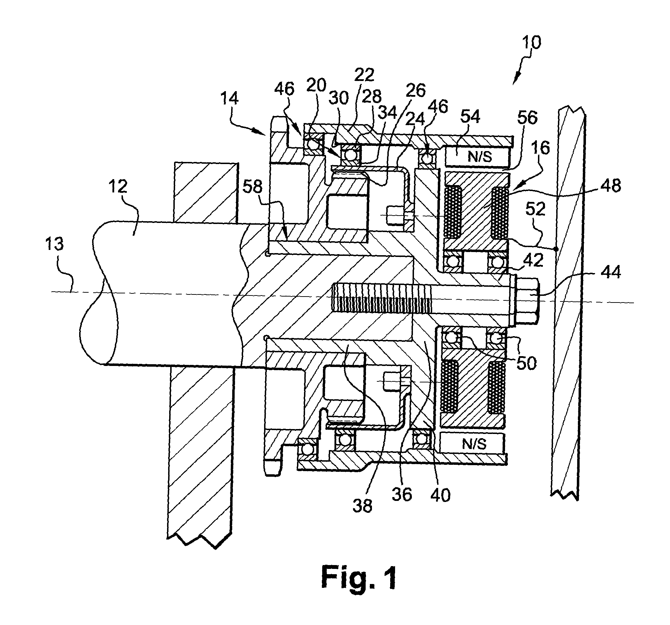

In Fig.1 a first variant of a cam phaser 10 for adjusting the phase angle of a camshaft 12 of an internal combustion engine, is represented. It includes a drive gear 14, which is here configured as a sprocket wheel, and serves in a well-known manner to drive the camshaft 12 via a chain (not shown), which communicates with the crankshaft of the engine (not shown).

The cam phaser 10 is arranged at one end of the camshaft 12, coaxially therewith, and comprises a harmonic drive associated with an electric motor 16 that are configured to permit selective phase adjustment of the camshaft 12 relative to the sprocket wheel 14 in order to modify the valve lift event timing.

More specifically, the harmonic drive comprises a roller bearing 20 associated with a control shaft 22, a flexspline 24 and a rigid, circular spline 26 that are concentrically arranged. However, as it will appear from the below description, their configuration is inversed as compared to the conventional design of harmonic drives as, e.g., described in US 6,328,006.

The roller bearing 20, configured as ball bearing, is received inside its associated, hollow control shaft 22. The outer ring 28 of roller bearing 20 is arranged (closely fitted) inside a bearing section 30 of control shaft 22 that has an elliptical inner cross-section. This outer ring 28, preferably thin-walled, conforms to the elliptical shape of the control shaft section 30, and the inner ring 34 gets its elliptical shape via the rollers. In the present embodiment, the pot-shaped flexspline 24 is arranged on the inner ring 34 and fixed to the camshaft 12. The flexspline 24 is internally toothed and meshes with the externally toothed circular spline 26, the latter being rigidly connected to the sprocket wheel 14. As it will be understood by those skilled in the art, the flexspline 24 and circular spline 26 are only in contact in the regions corresponding to the minor axis of the ellipse. The flexspline 24 and circular spline 26 have a different number of teeth; the flexspline 26 may, e.g., have two more teeth.

The wave generator function is achieved by the ball bearing 20 mounted on the hollow shaft 22, which can be rotated about the camshaft's axis 13, relative to the camshaft 12 itself and to the sprocket wheel 14. As a matter of fact, the hollow control shaft 22 advantageously extends along the camshaft 12 from about the sprocket wheel 14, over the harmonic drive mechanism up to the motor 16 and thus also serves as housing. An inner support member 36 has a tubular portion 38 with an outer circular section and an inner profiled section adapted for receiving therein the camshaft's end. The support member 36 further comprises a radial flange 40 that supports a sleeve 42 coaxially with the tubular portion 38 and through which the support member 36 is fixed to the camshaft by means of a bolt 44: the support member 36 is thus integral with the camshaft 12. A pair of roller bearings 46 is advantageously provided to take the radial loads on the control shaft 22.

Rotation of the hollow control shaft 22 can be controlled as desired in speed and direction by appropriately energizing the electric motor 16. While the rotation of the control shaft 22 could be achieved by an eccentric motor shaft and appropriate coupling, the motor 16 is here integrated in the cam phaser 10 housing-as formed by the hollow control shaft 22-at the end of the camshaft 12. The stator is formed by an armature 48 mounted on sleeve 42; to avoid brushes or other rotary electrical connections the armature 48 is mounted on a pair of roller bearings 50 so that it can be immobilized, e.g. by means of a bracket represented by line 52. The rotor is achieved by permanent magnets 54 concentrically arranged with respect to the armature 48 and fixed to the inner wall of control shaft 22, an annular gap 56 remaining between stator and rotor.

The sprocket wheel 14 is rotatably mounted in an external, circular recess 58 formed in tubular portion 38. Actually, as shown in Fig.1, the hub of sprocket wheel 14 is rotatable about tubular portion 38 in recess 58 and is axially locked between a shoulder on the camshaft, on the left, and a shoulder delimiting the recess 58 on the right. The circular spline 26 is integrally formed with the sprocket wheel 14. It shall be appreciated that in the present variant, the cam phaser 10 is conceived as a one-block unit with integrated sprocket wheel 14 that can easily be fitted and screwed to the camshaft's end. All moving components rotate about the common axis 13.

When the engine is running, the sprocket wheel 14 is permamently driven by the crankshaft, which in turn drives the camshaft 12. As it will appear from the following description, the harmonic drive enables the camshaft 12 to be relatively angularly adjusted with respect to the drive gear 14, while maintaining driving engagement between the drive gear 14 and camshaft 12.

As previously mentioned, control shaft 22 together with roller bearing 20 form the wave generator. When the control shaft 22 rotates at the speed of the drive gear 14, the same regions of flexspline 24 and circular spline 26 remain in meshing engagement and rotating torque is thus transferred from the drive gear 14 to the camshaft 12. Accordingly, the camshaft 12 is rotated without modifying the phase relationship.

It may be noted that under certain conditions (depending amongst others on the friction in the harmonic drive, gear ratio, speed) self-locking may occur in the harmonic drive and may be sufficient to rotate the camshaft 12 with the control shaft 22 being taken along without relative movement of the control shaft 12 relative to the circular spline 26. Preferably however, the speed of the control shaft 22 is monitored and the motor 16 controlled to ensure that the control shaft 22 rotates at the speed of the drive gear 14 when no camshaft phase adjustment is desired.

In order to vary the phase relationship between the camshaft 12 and sprocket wheel 14, motor 16 is controlled so that the control shaft 22 rotates faster or slower than the camshaft 12, as appropriate. As it will be understood by those skilled in the art, when the control shaft 22 completes one revolution about the circular spline 26, the flexspline 24 is caused to engage successively all the teeth of the externally toothed circular spline 26, whereby a relative motion of these two gears is obtained to the extent of the teeth difference. This also corresponds to the angle of rotation by which the camshaft 12 rotates relative to the drive gear 14. Thanks to the big gear reduction ratio, the torque that has to be produced is very small. While the position of the camshaft changes relative to the sprocket wheel 14, it is still being rotationally driven by the latter about axis 13.

This is a compact single-block cam phaser 10 integrating all required components to drive the camshaft 12. The design is simple, using a minimum number of components for the harmonic drive and motor-driven control shaft 22.

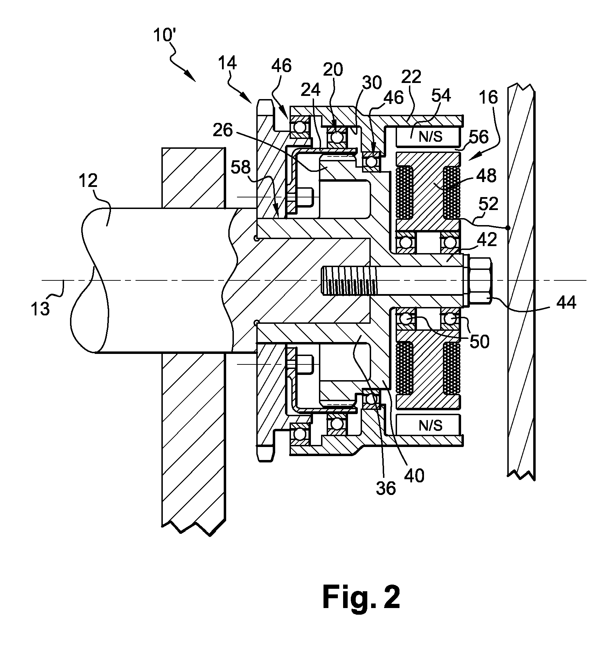

Fig.2 shows a second embodiment of cam phaser 10', which distinguishes over that of Fig.1 in that the flexspline 24 is fixed to the sprocket wheel 14, while the circular spline 26 is integrally formed with the support member 36.

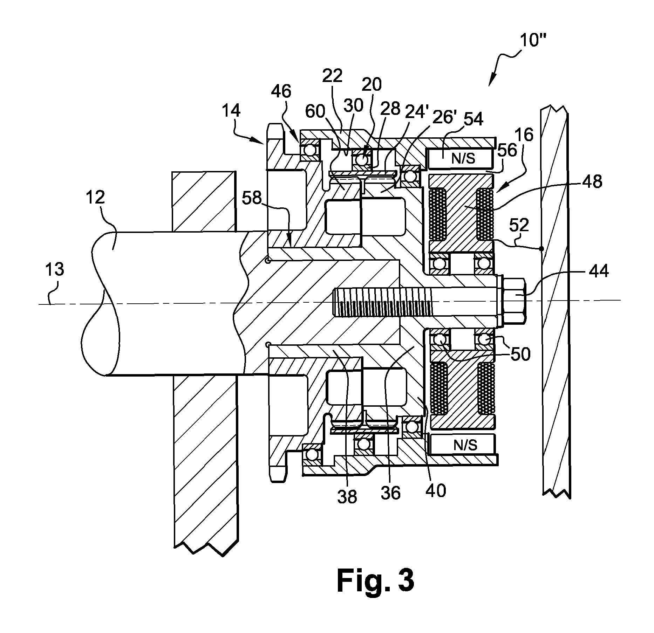

Turning now to Fig.3, a further embodiment of cam phaser 10" is shown, which employs a ring-type flexspline 24'. This flexspline 24', still inner toothed, is mounted on the inner ring 34 of roller bearing 20 and engages a concentric circular spline 26' and a further concentric, circular gear 60, adjacent and coaxial with the circular spline 26'. Circular gear 60 and circular spline 26' are externally toothed, but whilst circular gear 60 has as many teeth as flexspline 24', circular spline 26' has less teeth, .e.g. two teeth less, than flexspline 24'.

Circular gear 60 is connected to sprocket wheel 14 (actually here integral therewith), their common hub being rotatable about the tubular portion 38 of the support member 36. Circular spline 26' is connected (integral) with the support member 36.

Operation of the cam phaser in the embodiments of Figs 2 and 3 is similar to that of Fig.1. When no phase variation is desired, control shaft 22 is preferably rotated at the same speed as drive gear 14. There is no relative movement between flexspline 24' and circular spline 26', whereby the camshaft 12 is taken along at the same speed as sprocket wheel 14.

In order to vary the valve lift event timing, the camshaft phase is adjusted by changing the rotation speed of the control shaft 22, which will cause the rotation of the flexspline 24' relative to the circular spline 26' and hence of the camshaft 12 relative to the sprocket wheel 14.

The present cam phaser, in all three embodiments, allows the phase of the camshaft to be reliably altered whilst the engine is running. In this regard, as it has been understood, the cam phase may be selectively advanced or retarded depending upon the direction in which the control shaft 22 is rotated (relative to the circular spline 26 or 26'). Such adjustment may be controlled by the engine management system of typical automobiles. The cam phaser therefore effectively allows the rotational position of the camshaft 12 to be varied relative to the rotational position of the sprocket 14.

In this connection, a phase detector may be included to determine the angular position of the camshaft 12 as well as an electronic control unit to operate the electric motor in accordance with phase information provided by the engine management system based on engine parameters.

[0021] Importantly, once the cam phase has been adjusted into the desired advanced / retarded position, the control shaft 22 speed is set back to the drive gear 14 speed, whereby the cam phase will remain in that position until it is positively re-adjusted by the engine management system. The power required to operate the motor 16 so that control shaft 22 rotates at the drive gear 14 speed is relatively low.

## Claims

1. Variable cam phaser for a camshaft of an internal combustion engine comprising:
a drive member (14);
a harmonic drive operatively connected to said drive member (14) and having an output member for driving a camshaft (12), said harmonic drive being controllable by means of a rotatable control shaft (22);
**characterized in that** said harmonic drive comprises a roller bearing (20) with an elliptically configured inner ring (34), an internally toothed flexspline (24, 24') that is arranged on the inner ring (34) of said roller bearing and that cooperates with an externally toothed circular spline (26, 26').

2. Variable cam phaser according to claim 1, wherein said circular spline (26) is connected to said drive member (14) and said output member is formed by a pot-shaped flexspline (24).

3. Variable cam phaser according to claim 1, wherein said flexspline (24) is pot-shaped and connected to said drive member (14); and said output member is formed by said circular spline (26).

4. Variable cam phaser according to claim 1, wherein said flexspline (24') is configured as an internally toothed ring that meshes with said circular spline (26') and a further, concentric circular gear (60), said circular spline (26') and further gear (60) having a different number of teeth.

5. Variable cam phaser according to any one of the preceding claims, wherein said flexspline (24, 24') comprises more teeth than said circular spline (26, 26'), preferably two or a multiple thereof.

6. Variable cam phaser according to any one of the preceding claims, wherein said control shaft (22) is a hollow shaft having an inner bearing section (30) on which the outer ring (28) of said roller bearing is mounted.

7. Variable cam phaser according to claim 1, wherein said bearing section (30) of said control shaft has an elliptical cross-section or said outer ring (28) of said roller bearing is elliptically configured.

8. Variable cam phaser according to claim 6 or 7, comprising an electric motor (16) integrated inside said hollow shaft (22), one of the armature (48) or the field component (54) being fixed to the inner wall of said control shaft (22) while the other is concentrically arranged and coaxial with said camshaft (12).

9. Variable cam phaser according to any one of the preceding claims, comprising an inner support member (36) comprising a tubular portion (38) rotationally supporting said drive member (14) and having an inner profiled section for receiving a camshaft's end therein.

10. Variable cam phaser according to claim 9 when dependent on claim 8, comprising a sleeve (42) coaxial with said tubular portion (38) for supporting said armature (48) and adapted to receive a screw therethrough to be secured to the camshaft (12).

11. Variable cam phaser according to any one of the preceding claims, comprising an electric motor (16) coupled to said rotatable control shaft (22).

12. A valve train of an internal combustion engine comprising a camshaft and a cam phaser according to any one of the preceding claims mounted to said camshaft for driving the latter.
